# DEMANDE DE BREVET EUROPEEN

(11) **EP 1 569 482 A1**
(43) Date de publication de la demande: **31.08.2005**
(21) Numéro de dépôt: 04100311.2
(22) Date de dépôt: 29.01.2004
(51) Int. Cl.: H04Q 7/38, H04Q 7/22

(54) **Méthode de sécurisation de la transmission de messages courts**

(71) Demandeur: Nagracard S.A., 1033 Cheseaux-sur-Lausanne (CH)
(72) Inventeur: Joly, Stéphane, 1098 Epesses (CH)
(74) Mandataire: Wenger, Joel-Théophile

(57) **Abrégé**

Le but de la présente invention consiste à sécuriser la transmission des messages courts SMS via un réseau mobile afin d'empêcher leur capture et leur exploitation par des tiers.

Ce but est atteint par une méthode de sécurisation de la transmission de messages courts (SMS) entre un premier et un second équipement mobile (EM1, EM2) via un réseau de communication mobile (NET) caractérisée en ce qu'elle est basée sur la cryptographie à clés asymétriques utilisant une clé publique (Kpu1, Kpu2) associée à une clé privée (Kpr1, Kpr2) propre à chaque équipement mobile (EM1, EM2) et comprend les étapes suivantes:
- requête de la clé publique (Kpu2) du second équipement (EM2) par le premier équipement mobile (EM1),
- réception et stockage de cette clé publique (Kpu2) dans une mémoire temporaire accompagnée de l'identifiant (ID2) du second équipement mobile (EM2),
- encryption du message court SMS avec ladite clé publique (Kpu2) reçue,
- transmission du message encrypté Kpu2(SMS) au second équipement mobile (EM2) via le réseau mobile (NET).
- réception et décryption du message (SMS, EMS) par le second équipement mobile (EM2) avec la clé privée (Kpr2) dudit second équipement (EM2).

## Description

La présente invention concerne le domaine des télécommunications mobiles. Plus particulièrement, elle concerne les services de transmission des messages courts du type SMS (Short Message Service) ou MMS (Multimedia Message Service) via un réseau mobile du type GSM (Global System for Mobile communications), GPRS (General Packet Radio System) ou UMTS (Universal Mobile Telecommunications System).

L'utilisation de ces messages courts SMS et/ou MMS par les abonnés à un réseau de communication mobile est en constante augmentation en raison de leur prix unitaire relativement bas et leur indépendance de la durée en comparaison avec les conversations téléphoniques standards.

Le principal inconvénient constaté lors de l'acheminement de ces messages d'un abonné à un autre à travers le réseau mobile réside en ce qu'ils sont transmis en clair tandis que les conversations téléphoniques transmises sur le même réseau sont cryptées afin d'empêcher les écoutes abusives par des tiers.

Afin d'étendre l'utilisation du service de messagerie SMS et/ou MMS à des messages avec un contenu confidentiel, une certaine protection de la transmission de ceux-ci, tout au moins d'une manière similaire à celle qui est appliquée aux transmissions vocales, s'impose.

Le but de la présente invention consiste donc à sécuriser la transmission des messages courts afin d'empêcher leur capture par des tiers qui peuvent les exploiter de manière frauduleuse en défaveur des abonnés et/ou de l'opérateur de télécommunications mobiles.

Ce but est atteint par une méthode de sécurisation de la transmission de messages courts entre un premier et un second équipement mobile via un réseau de communication mobile caractérisée en ce qu'elle est basée sur à cryptographie à clés asymétriques utilisant une clé publique associée à une clé privée propre à chaque équipement mobile et comprend les étapes suivantes:
- requête de la clé publique du second équipement par le premier équipement mobile,
- réception et stockage de cette clé publique dans une mémoire temporaire accompagnée de l'identifiant du second équipement mobile,
- encryption du message court avec ladite clé publique reçue,
- transmission du message encrypté au second équipement mobile via le réseau mobile.
- réception et décryption du message par le second équipement mobile avec la clé privée dudit second équipement.

Les équipements mobiles susmentionnés sont constitués selon une réalisation préférée de l'invention par des téléphones portables aussi appelés téléphones mobiles ou téléphones cellulaires. Ces appareils sont munis d'un module de sécurité appelé carte SIM permettant leur identification sur le réseau mobile.

Les identifiants transmis durant le processus d'acquisition de la clé publique correspondent soit au numéro de téléphone seul, soit au numéro complet IMSI (International Mobile Subscriber Identification) qui identifie de manière unique un abonné sur le réseau mobile incluant entre autre son numéro de téléphone.

Préalablement à l'envoi d'un message court crypté à partir d'un équipement mobile à un autre, une clé publique est sollicitée, selon une première variante, auprès de l'équipement mobile auquel le message court est destiné. Dans une première phase, la requête de la clé publique peut être effectuée par une première communication entre le premier et le second équipement mobile. Après réception, cette clé est stockée puis, lors d'une seconde phase, la transmission du message court peut avoir lieu après encryption de celui-ci avec la clé publique stockée. Par exemple, lorsque ces équipements mobiles sont constitués par des téléphones mobiles, un utilisateur A établit une communication vocale avec son correspondant B pour lui demander sa clé. L'utilisateur B transmettra sa clé à l'utilisateur A au moyen d'un message court SMS par exemple. Dès réception, l'utilisateur A stocke cette clé qui servira à encrypter un message SMS que seul l'utilisateur B peut décrypter avec sa clé privée.

La clé publique reçue peut être vérifiée lors de l'établissement de la première communication soit par une reconnaissance vocale des correspondants, soit par comparaison du numéro composé lors de l'appel avec ce même numéro retourné par l'équipement mobile du correspondant qui accompagne la clé lors de sa transmission.

Lorsque le résultat de cette comparaison est positif, c'est-à-dire lorsque le numéro composé et le numéro retourné par le correspondant sont identiques, la clé publique reçue est acceptée et l'encryption du message court peut s'effectuer. Un message ainsi encrypté peut alors être décrypté lors de sa réception par le correspondant à l'aide de la clé privée stockée dans son équipement mobile.

Dans le cas d'une comparaison négative, la clé reçue est rejetée et aucune encryption ne peut avoir lieu. Dans un tel cas de non-reconnaissance du correspondant, l'utilisateur de l'équipement mobile peut être averti par un message d'erreur adéquat et recommencer l'appel suivi de la requête d'une clé de son correspondant.

La méthode de sécurisation selon la méthode de l'invention avec reconnaissance du correspondant ou plus précisément avec la vérification de l'identifiant de l'origine de la clé ou sa validation comporte les étapes supplémentaires suivantes:
- transmission avec la requête de la clé publique du second équipement d'un identifiant du second équipement concerné, et comparaison avec l'identifiant reçu en retour,
- lorsque le résultat de la comparaison est positif, encryption du message court avec la clé publique reçue.

Le stockage et la gestion des clés privée et publique ainsi que les opérations d'encryptage et de décryptage sont effectués par le module de sécurité des équipements mobiles respectifs le plus souvent appelé carte SIM (Subscriber Identity Module). Les algorithmes de cryptage asymétriques à clés publique et privée utilisés sont en général du type RSA (Rivest, Shamir, Adelman) ou apparentés. L'avantage principal de tels algorithmes est que la clé privée personnelle à chaque module de sécurité (carte SIM) n'est jamais échangée entre les équipements mobiles, seule les clés publiques sont transmises. Ainsi la capture d'une clé publique devient inutile pour décrypter un message court sans la connaissance de la clé privée correspondante.

Selon une variante de la méthode de l'invention, la reconnaissance des identifiants des équipements mobiles peut être double en comparant les deux identifiants retournés par le correspondant. En effet, dans une transmission via un réseau mobile, le premier équipement transmet l'identifiant du destinataire ainsi que son propre identifiant au second équipement mobile. Ce dernier retourne, avec sa clé publique, l'identifiant du premier équipement ainsi que son propre identifiant. Le premier équipement mobile peut ainsi effectuer une comparaison de son propre identifiant avec celui retourné par le second équipement et une autre comparaison de l'identifiant du second équipement préalablement transmis avec celui retourné par le second équipement. Cette double comparaison permet de prévenir les erreurs de transmission et une validation plus sûre de la clé publique.

La présente invention porte également sur un module de sécurité ou carte SIM pour un équipement mobile ou téléphone portable comprenant des moyens matériels et logiciels de stockage et de gestion d'une clé privée et d'une clé publique d'un algorithme à clés asymétriques ainsi qu'une unité d'encryption de messages courts du type SMS et/ou MMS à transmettre et une unité de décryption de messages courts cryptés reçus.

Selon une seconde variante de la présente invention, l'équipement mobile désirant transmettre un message court encrypté à un autre équipement mobile sollicite la clé publique de son correspondant auprès d'un serveur central au lieu de l'équipement mobile appelé.

Dans cette configuration, le serveur central stocke dans une base de données un ensemble d'identifiants sous forme de numéros de téléphone ou de numéros IMSI associés chacun à une clé publique. Ainsi avant la transmission d'un message court à contenu confidentiel, le téléphone portable s'adresse d'abord au serveur central pour obtenir la clé publique correspondant au numéro du destinataire du message. Cette clé sert à encrypter le message court à transmettre qui sera ensuite décrypté, après réception, avec la clé privée du destinataire.

Dans une variante de la configuration avec serveur central, celui-ci peut être considéré comme digne de confiance, ce qui rend les étapes de reconnaissance des identifiants transmis et reçus superflues.

L'invention sera mieux comprise grâce à la description détaillée qui va suivre et qui se réfère aux figures annexées données à titre d'exemple nullement limitatif, à savoir:
- La figure 1 illustre un schéma bloc montrant les étapes de la requête d'une clé publique et celle de la reconnaissance de l'équipement mobile appelé.
- La figure 2 illustre l'étape de la transmission d'un message court crypté
- La figure 3 illustre la variante de la méthode de l'invention où une clé publique est sollicitée auprès d'un serveur central.

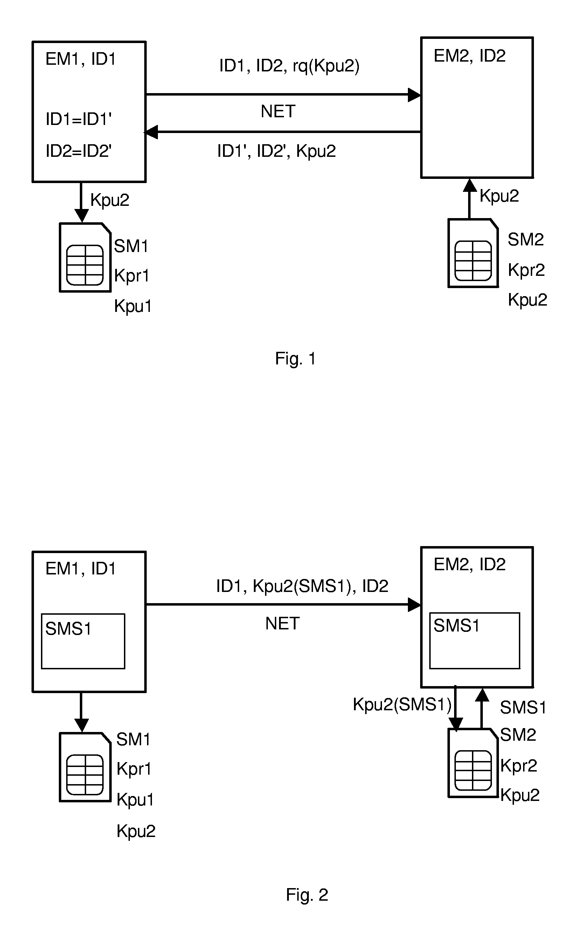

La figure 1 représente deux équipements mobiles ou téléphones mobiles EM1 et EM2 muni chacun d'un module de sécurité ou carte SIM respectivement SM1 et SM2 échangeant des données selon la première variante de la méthode de l'invention. Cette variante se distingue en ce que la clé publique (Kpu2) est fournie par le téléphone mobile (EM2) au téléphone EM1 suite à une requête rq(Kpu2) émise par ce dernier. Lors d'un appel assorti d'une commande de transmission d'un message court SMS crypté, le premier téléphone transmet la requête rq(Kpu2) au second téléphone avec son identifiant ID1 ainsi que celui de son correspondant ID2. Ces identifiants (ID1, ID2) correspondent dans la plupart des cas au numéro d'appel des téléphones mobiles (EM1, EM2) respectifs. Après réception de cette requête, le téléphone EM2 du correspondant communique la clé publique Kpu2 associée à la clé privée Kpr2 toutes deux stockées dans la carte SIM2. Cette clé est accompagnée du numéro du téléphone appelant ID1' et de celui du téléphone du correspondant ID2'. Après réception de ces données, le téléphone EM1 appelant les stocke dans une mémoire temporaire pour vérification. En effet, avant d'accepter une clé d'encryptage Kpu2, le téléphone EM1 qui l'a requise vérifie si elle provient bien du téléphone EM2 du correspondant appelé en comparant les numéros (ID1', ID2') retournés avec ceux (ID1, ID2) qu'il a transmis auparavant lors du premier appel. Il s'agit d'un test d'égalité d'une part entre le numéro ID1 du téléphone EM1 appelant et le numéro ID1' retourné par le correspondant (ID1 = ID1') et d'autre part entre le numéro ID2 du correspondant transmis et celui ID2' retourné par ce dernier (ID2 = ID2'). Cette double vérification peut être réduite, selon une variante, uniquement à celle de la concordance des numéros du correspondant transmis et retournés (ID2 = ID2'). Si ces égalités sont vraies, la clé publique Kpu2 du téléphone EM2 du correspondant est stockée et utilisée pour l'encryption du message court SMS1, ces opérations étant effectuées par la carte SIM (SM1).

Dans le cas d'une comparaison infructueuse, la clé reçue est considérée comme invalide et effacée de la mémoire temporaire ce qui peut provoquer l'affichage d'un message d'erreur sur l'écran du téléphone EM1. L'utilisateur du téléphone EM1 est invité à répéter une nouvelle transmission d'un message SMS crypté entraînant une nouvelle requête d'une clé publique avec une nouvelle reconnaissance des numéros.

La figure 2 montre le cas d'une transmission d'un message court SMS crypté avec la clé publique Kpu2 du correspondant. Ce dernier sera en mesure de décrypter ce message grâce à la clé privée Kpr2 stockée dans la carte SIM associée à la clé publique Kpu2 avec laquelle le message est encrypté.

Les clés publiques reçues avec succès de la part de correspondants appelés et validées peuvent être enregistrées sur la carte SIM dans un répertoire approprié au même titre que les numéros de téléphones. Ces clés ainsi mémorisées permettent ultérieurement un encryptage direct des messages courts SMS sans préalablement passer par les étapes de requête de la clé et de vérification du numéro de téléphone du correspondant.

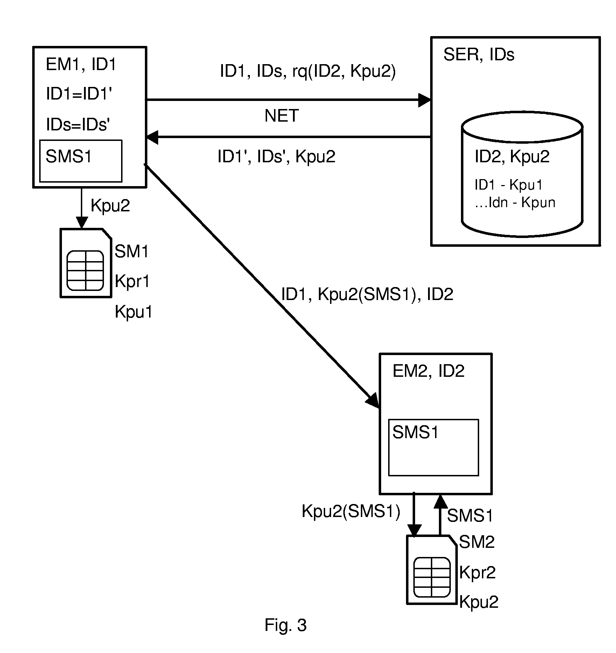

La figure 3 montre la deuxième variante de la méthode selon l'invention où le téléphone mobile EM1 sollicite la clé publique Kpu2 du téléphone EM2 du correspondant auprès d'un serveur central SER. Celui-ci gère une base de données contenant une liste de couples identifiants ou numéros de téléphone - clés publiques correspondante (ID1 - Kpu1 ...IDn - Kpun). De plus, le serveur central SER, pouvant dépendre d'un ou plusieurs opérateurs de téléphonie mobile offrant le service de transmission de message SMS cryptés, peut être considéré comme digne de confiance. Par conséquent, la vérification simple ou double des numéros de téléphone du serveur (IDs = IDs') ou de l'appelant (ID1 = ID1'), comme décrit dans la première variante où la clé est fournie par le téléphone du correspondant, devient facultative, voire inutile.

Une clé publique obtenue auprès du serveur central (SER) peut également être stockée dans le répertoire des numéros de téléphones comme dans la variante où la clé provient du correspondant auquel le message crypté est destiné.

Selon cette deuxième variante, la méthode de l'invention peut être entièrement automatisée, c'est-à-dire que les étapes ci-dessus allant de la requête de la clé publique jusqu'à la transmission du message court encrypté sont exécutées en arrière plan de façon transparente pour l'utilisateur de l'équipement mobile. En effet, le serveur central est connecté en permanence sur le réseau mobile ce qui permet de requérir une clé publique en tout moment même si l'équipement mobile ou le téléphone du correspondant est déclenché ou déconnecté du réseau.

Dès la réception, par le téléphone EM1, de la clé publique Kpu2 transmise par le serveur SER, le message SMS1 est encrypté avec la clé publique Kpu2 puis transmis au téléphone EM2 du correspondant avec les identifiants ID1 et ID2.

Selon cette variante automatisée, un stockage de la clé publique reçue peut être proposé par un affichage d'un message adéquat avant ou après l'envoi du message SMS1 crypté. De cette manière, un envoi ultérieur d'un nouveau message SMS1 crypté au même correspondant ne nécessite plus de requête de la clé auprès du serveur central (SER) mais seulement une commande d'extraction de la clé de la mémoire de la carte SIM.

La méthode automatique peut ainsi se compléter par une étape préliminaire de recherche de la clé du destinataire du message SMS crypté dans la mémoire de la carte SIM avant de lancer la requête de ladite clé auprès du serveur (SER) au cas où la clé ne serait pas disponible dans la carte SIM.

Selon une variante, le service de transmission de message SMS cryptés peut être limité aux utilisateurs inscrits dans la base de données du serveur SER. Dans un tel cas, une vérification du numéro du téléphone appelant peut être effectuée par confrontation avec ceux de la liste du serveur. Lorsque cette vérification échoue à cause de l'absence d'un numéro de cette liste, un message court SMS peut être transmis par le serveur SER afin d'inciter l'utilisateur non enregistré à s'inscrire au service de transmission de SMS cryptés.

Cette vérification peut également être exécutée avec le numéro du téléphone du correspondant lorsque le serveur reçoit une requête de clé publique. Dans le cas où la requête n'aboutirait pas par défaut d'enregistrement du correspondant, le serveur lui transmet un message court d'invitation à son enregistrement dans la base de données du serveur. L'utilisateur qui a émis la requête est averti qu'il ne peut pas transmettre de message court crypté à ce correspondant particulier avec une clé issue du serveur. Par contre, il lui reste la possibilité d'appeler son correspondant pour lui demander sa clé par communication vocale et transmettre le message crypté comme décrit plus haut.

## Revendications

1. Méthode de sécurisation de la transmission de messages courts (SMS, MMS) entre un premier et un second équipement mobile (EM1, EM2) via un réseau de communication mobile (NET) **caractérisée en ce qu'**elle est basée sur la cryptographie à clés asymétriques utilisant une clé publique (Kpu1, Kpu2) associée à une clé privée (Kpr1, Kpr2) propre à chaque équipement mobile (EM1, EM2) et comprend les étapes suivantes:
• requête de la clé publique (Kpu2) du second équipement (EM2) par le premier équipement mobile (EM1),
• réception et stockage de cette clé publique (Kpu2) dans une mémoire temporaire accompagnée de l'identifiant (ID2) du second équipement mobile (EM2),
• encryption du message court SMS avec ladite clé publique (Kpu2) reçue,
• transmission du message encrypté Kpu2(SMS) au second équipement mobile (EM2) via le réseau mobile (NET).
• réception et décryption du message (SMS, EMS) par le second équipement mobile (EM2) avec la clé privée (Kpr2) dudit second équipement (EM2).

2. Méthode selon la revendication 1, **caractérisée en ce que** la requête de la clé publique (Kpu2) est effectuée auprès du second équipement mobile (EM2).

3. Méthode selon les revendications 1 et 2, **caractérisée en ce qu'**une vérification de l'identifiant (ID2) du second équipement mobile (EM2) est effectuée comprenant les étapes suivantes:
• transmission avec la requête de la clé publique (Kpu2) du second équipement (EM2) d'un identifiant (ID2) du second équipement concerné, et comparaison avec l'identifiant (ID2') reçu en retour,
• lorsque le résultat de la comparaison est positif, encryption du message court (SMS1) avec la clé publique (Kpu2) reçue.

4. Méthode selon les revendications 1 à 3, **caractérisée en ce qu'**elle comporte une étape supplémentaire de transmission, avec la requête de la clé publique (Kpu2) du second équipement mobile (EM2) de l'identifiant (ID1) du premier équipement mobile (EM1) et comparaison avec l'identifiant (ID1') retourné.

5. Méthode selon les revendications 3 et 4, **caractérisée en ce qu'**un message d'erreur est affiché lorsque le résultat de la comparaison est négatif, ledit message incitant la répétition de la transmission d'un message court encrypté entraînant la requête d'une clé publique associée à la clé privée du destinataire du message court.

6. Méthode selon les revendications 3 et 4, **caractérisée en ce que** le second équipement mobile (EM2) retourne l'identifiant (ID2') dudit second équipement mobile (EM2) et l'identifiant (ID1') du premier équipement mobile (EM1) avec la clé publique (Kpu2) dudit second équipement mobile (EM2).

7. Méthode selon la revendication 1, **caractérisée en ce que** la requête de la clé publique (Kpu2) est effectuée auprès d'un serveur central (SER) comportant une base de données regroupant un ensemble d'identifiants d'équipement mobiles à chacun desquels est associé une clé publique.

8. Méthode selon les revendications 3, 4 et 7, **caractérisée en ce que** le serveur (SER) retourne l'identifiant (ID2') du second équipement mobile (EM2) et l'identifiant (ID1') du premier équipement mobile (EM1) avec la clé publique (Kpu2) dudit second équipement mobile (EM2).

9. Méthode selon les revendications 1 à 8, **caractérisée en ce que** l'équipement mobile (EM1, EM2) est constitué par un téléphone mobile auquel est connecté un module de sécurité constitué par une carte SIM (SIM1, SIM2) servant à l'identification dudit téléphone sur le réseau mobile (NET).

10. Méthode selon les revendications 1 et 9, **caractérisée en ce que** les opérations de stockage, de gestion des clés publique et privée, d'encryption et de décryption des messages courts sont effectuées par la carte SIM du téléphone mobile.

11. Méthode selon les revendications 1 à 10, **caractérisée en ce que** la requête de la clé publique (Kpu2) s'effectue lors de l'établissement d'une communication vocale entre deux équipements mobiles (EM1, EM2).

12. Module de sécurité pour équipement mobile servant à l'identification dudit équipement sur le réseau mobile **caractérisé en ce qu'**il comporte des moyens matériels et logiciels de stockage et de gestion d'une clé privée et d'une clé publique d'un algorithme à clés asymétriques et une unité d'encryption de messages courts à transmettre et une unité de décryption de messages courts cryptés reçus.
